# EUROPEAN PATENT APPLICATION

(11) **EP 4 708 276 A1**
(43) Date of publication of application: **11.03.2026**
(21) Application number: 25199968.6
(22) Date of filing: 03.09.2025
(51) Int. Cl.: G09G 5/00

(54) **MONITORS WITH ENHANCED EDID INFORMATION FOR SUPPORTING PICTURE-MODE PROCESSING IN A SOURCE DEVICE**

(30) Priority: 04.09.2024 US 202463690598 P; 03.12.2024 EP 24217291
(71) Applicant: Dolby Laboratories Licensing Corporation, San Francisco, CA 94103 (US)
(72) Inventor: SIMMONS, Darrin, San Francisco, 94103 (US); LIANG, Yan, San Francisco, 94103 (US)
(74) Representative: Dolby International AB Patent Group Europe

(57) **Abstract**

Methods and systems are described for processing picture modes of a sink device, such as a monitor, using a source device, such as a personal computer or a gaming system. Given picture mode parameters related to picture-mode processing in an EDID of the sink device, such as brightness, saturation, and the white point, picture-mode-related processing for a sink device may be performed by the source device, thus enabling new display-related features without increasing the cost of the sink device.

## Description

### CROSS-REFERENCE TO RELATED APPLICATIONS

This application claims the benefit of priority from United States Patent Application No. 63/690,598, filed 4 September 2024, and European Patent Application No. 24217291.4, filed 3 December 2024, each of which is incorporated by reference herein in its entirety.

### TECHNOLOGY

The present document relates generally to monitors. More particularly, embodiments of the present invention relate to monitors with enhanced extended display identification data (EDID) for supporting executing picture mode-related processing for the monitors in a source device.

### BACKGROUND

As used herein the term "software-based monitor" refers to a monitor or display with limited processing capabilities, where advanced pixel processing for displaying pictures or video on the monitor occurs on an external source device, such a set-top box, a personal computer, a display server, and the like. As used herein, the term "source device" denotes a device that feeds content, such as images and video into a "sink device," such as a display, monitor, or television.

Television sets today support a variety of picture modes, such as vivid, movie, standard, high-dynamic range, game, and the like. Support for these modes is provided by the TVs internal processor or system on a chip (SoC). In contrast to TVs, display monitors have much fewer features than TVs, since, to reduce overall cost, their internal processors are far less capable. Given that most such "dumb" monitors are controlled by personal computers or other external devices, as appreciated by the inventors here, advanced picture modes using software-based monitors are desired, and they are described herein.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

### BRIEF DESCRIPTION OF THE DRAWINGS

An embodiment of the present invention is illustrated by way of example, and not in way by limitation, in the figures of the accompanying drawings and in which like reference numerals refer to similar elements and in which:

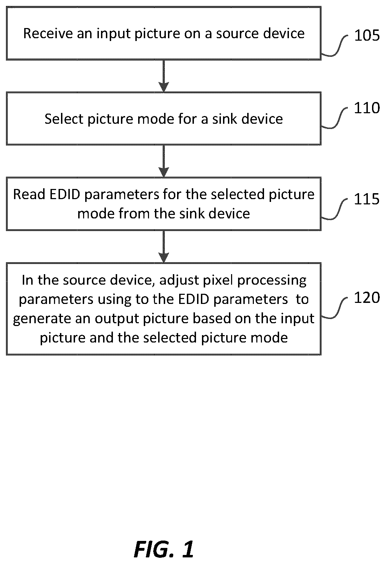

FIG. 1 depicts an example data flow for picture mode processing according to an embodiment of this invention.

### DESCRIPTION OF EXAMPLE EMBODIMENTS

Example embodiments that relate to enabling advanced picture modes on monitors with limited processing power are described herein. In the following description, for the purposes of explanation, numerous specific details are set forth in order to provide a thorough understanding of the various embodiments of present invention. It will be apparent, however, that the various embodiments of the present invention may be practiced without these specific details. In other instances, well-known structures and devices are not described in exhaustive detail, in order to avoid unnecessarily occluding, obscuring, or obfuscating embodiments of the present invention.

### SUMMARY

Example embodiments described herein relate to enabling advanced picture modes on monitors with limited processing power. Embodiments described herein describe a method for displaying images from a source device on a sink device, the method comprising, on the source device:
accessing extended display identification data (EDID) information from the sink device, wherein the EDID information includes picture mode parameters to adjust pixel processing on the source device according to a selected picture mode;
accessing an input picture; and generating an output picture to be displayed on the sink device based on the EDID picture mode parameters for the selected picture mode and the input picture.

### PICTURES MODES AND EDID INFORMATION

Television picture modes, such as vivid, standard, game, bright, and the like, allow a user to define how they would like to have displayed content adapt to different environments. For example, a Bright Picture mode may be more appealing in bright environment, and a Dark Picture mode may be more comfortable in a dark environment. These picture modes are selectable in a TV's On-Screen Display (OSD) menu and control the pixel processing functions, such as tone-mapping, color-volume mapping, and the like.

TVs generally have more processing power in their SoCs than "dumb" monitors. TV manufacturers are constantly looking to differentiate with enhanced video processing that requires even more capable SoCs. Meanwhile, monitors, generally, have less to work with as their SoCs are less capable. A monitor manufacturer that wishes to differentiate will need to either increase their bill of materials costs by including a larger or more powerful SoC or find another way to have advanced picture processing leverage other devices. Monitors are generally connected to source devices like PCs that have powerful processors and graphic processing units (GPUs), both of which are capable of processing pixels. Shifting the picture mode processing from the monitor side to the PC side would be a new direction to explore, allowing monitor vendors to change the cost equation when adding enhanced features.

As appreciated by the inventors, vendors of operating systems (OSs), like Apple, Microsoft, Google, and the like, would benefit commercially by being able to differentiate their OS and hardware by adding video processing capabilities on the source side. To date, all they have been able to consistently work with is the color volume advertised in a monitor Display ID. There is no known "picture mode" standard definition that a monitor can advertise to source devices to have the source device process content differently to make the content look better on the monitor.

The term EDID, for extended display identification data, denotes a data structure embedded in display monitors that can be used by source devices to identify the capabilities of the display. It includes the manufacturer name and serial number, product type, phosphor or filter type (as chromaticity data), timings supported by the display, and display resolution. In certain displays or monitors, the Vendor Specific Video Data Block (VSVDB) in the EDID may also define its color-volume capability. For example, Dolby Laboratories defines parameters to enable Dolby Vision, a high-dynamic range display format. The existing parameters include minimum and maximum luminance values supported by the display, color chromaticity data, and a display's white point. In general, today the EDID information is being used by sink devices to simply advertise their capabilities. In contrast, the EDID format enhancements proposed herein allow sink devices to also define what source devices could do on their behalf, by moving processing from the sink to the source.

In an embodiment, it is proposed to add into the EDID picture mode settings as well. Such settings can be passed to the source device (such as a PC or set-top box) so that the source device can do picture-mode related processing without burdening the monitor's processor, thus eliminating the requirement to add a more expensive SoC.

In an embodiment, without limitation, it is proposed to add one or more of the following picture-mode-related parameters into the EDID:
- DBrightness
- DSaturation
- DColorShift
- DContrast
- SupportAmbient
Table 1 provides an example implementation of these parameters. In this example, assuming a default set of values for the standard display mode, say, 0, the parameters are defined as decimal offset values in [-1, 1] to adjust brightness, color saturation, the white point, contrast, and other parameters of a target display.

**Table 1. Example of EDID parameters for picture modes**

| **Parameter** | **Min** | **Max** | **Description** |
|---|---|---|---|
| DBrightness | -1 | 1 | Viewer preference mode for adjusting brightness. |
| | | | Applied as offset |
| DColorShift | -1 | 1 | Viewer preference mode for adjusting the white point. Applied as offset |
| DSaturation | -1 | 1 | Offset to 'SaturationGain' term in trims metadata. |
| | | | Used for both Forward and Inverse Mapping |
| DContrast | -1 | 1 | Viewer preference mode for adjusting contrast. |
| | | | Applied as offset to MidContrast in the tone curve. |
| SupportAmbient | 0 | 1 | 1/0, enables or disables the ambient light compensation. |

These parameters are multipliers in the Display Management (DM) process, that is, the pixel processing to generate output pictures for display on a device, e.g., as described in U.S. Patent 11,803,948, "Display management for high dynamic range images, by R. Atkins et al.*,* incorporated herein by reference in its entirety. For a given input image and a target display, display management aims to generate an output image for the target display by applying one or more of tone mapping, gamut mapping, color management, frame-rate conversion, and the like. This processing may be referred to herein as 'pixel processing'. Parameters of the functions used to perform such mappings to adjust saturation and intensity of an input image for a given display may be referred to correspondingly as 'pixel processing parameters'.

The picture mode parameters provided in Table 1 may be used to modify one or more of the pixel processing parameters used to adjust pixel values as part of the display management process. Some of the picture mode parameters above may have a default value of 0, where 0 represents no change to the existing value (e.g., brightness, saturation). In an embodiment, their values may represent a percentage change of a pixel processing parameter from an initial value.

The exact form of the mappings applied as part of the pixel processing depends on the implementation, and display mapping techniques and corresponding equations will be known to a skilled person in the field of display management. In the examples described herein, the picture mode parameters provided in Table 1 above may be applied as offsets to modify corresponding pixel processing parameters of the display mapping equations for a given implementation. In one example, a display mapping equation includes a brightness pixel processing parameter which may be applied as a multiplicative factor as part of a predefined equation for brightness. This brightness pixel processing parameter may take a default value of 1.

As indicated in Table 1 above, the picture mode parameters may be applied to the display management process in the form of an offset. In the example given above, the existing brightness pixel processing parameter is adjusted according to the value of DBrightness picture mode parameter. In this example, the DBrightness parameter taking a value of 0.1 might modify the brightness pixel processing parameter, having a default value of 1, to 1.1, thereby increasing the brightness by 10% over what would have been displayed. Similarly, a -0.5 DBrightness might reduce the brightness by 50%.

Similarly, the other picture mode parameters provided in Table 1 above can be applied to adjust various parameters of the pixel processing. The DColorShift allows a user to adjust the white point, and DSaturation allows a user to adjust the Saturation gain in color trims, which are controls for a content creator to perform additional manual modification to the tone-mapping curve to obtain the desired creative intent during tone mapping. In an embodiment, certain picture mode parameters may take "on/off" values denoted, for example, as "0 = off" or "1 = on." An example of such a parameter includes the "SupportAmbient" parameter to enable or disable ambient light compensation during the pixel-mapping processing.

The following data provide examples of these values for three picture modes for Dolby Vision.
Tmax = 400 // Max Luminance (nits) of a target display
Tmin = 0.005 // Min luminance (nits) of the target display
TPrimaries = 0.64 0.33 0.30 0.60 0.15 0.06 0.3127 0.3290 // xyz primaries
TEOTF = POWER // The EOTF (electro optical transfer function) of the target display (e.g., gamma, PQ, BT. 1886, etc.)
Tgamma = 2.2 // Gamma value
Each of the values above is specified as part of the enhanced EDID proposed herein. These values are common to all three example picture modes provided below.
[PictureMode = 0]
PictureModeName = Dolby Vision Dark
[PictureMode = 1]
PictureModeName = Dolby Vision Bright
DBrightness = 0.3
[PictureMode = 2]
PictureModeName = Dolby Vision Vivid
DBrightness = 0.5
DSaturation = 0.1
In the examples provided above, only those picture mode parameters that are required to adjust the pixel processing for a given picture mode are specified. For example, for Picture Mode 1 ('Dolby Vision Bright'), only the brightness is adjusted, and so the other picture mode parameters (DSaturation, DColorShift, DContrast) take a default value of '0', meaning that no change is made to the corresponding pixel processing parameter values.
It should be noted that the above three example picture modes are non-limiting, and that other picture modes may be defined according to desired display characteristics. The enhanced EDID described herein may enable OEMs to define additional picture modes and then set unique picture mode parameters for each mode. One example of an additional picture mode is "Dolby Vision Game" picture mode. This mode would increase brightness and saturation for gaming.

Without limitation, benefits of example embodiments include:
- Provide a general way of moving picture quality-related post processing from a sink device to the source device
- Reduce the latency on the sink device
- Reduce the cost of support high-dynamic range processing, such as Dolby Vision, in monitors by moving all HDR processing out of the sink and into the source device
- Could become the foundation of a standard between PCs and Monitors to define source behavior when connected to a monitor that the monitor vendor can control/advertise.

FIG. 1 depicts an example of picture-mode processing according to an example embodiment. Given an input picture in a source device (step 105), in step 110, a user or some other process (e.g., a gaming or movie streaming application) may select a preferred picture mode to display the image on a sink device. Next, in step 115, the source device reads the EDID information from the sink device as it relates to the selected picture mode. Then, given the EDID parameters for the selected picture mode, the source device adjusts its pixel processing to generate output pictures for the sink device (step 120).

### EXAMPLE COMPUTER SYSTEM IMPLEMENTATION

Embodiments of the present invention may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific IC (ASIC), and/or apparatus that includes one or more of such systems, devices or components. The computer and/or IC may perform, control, or execute instructions relating to applying picture-mode techniques in a source device, such as those described herein. The computer and/or IC may compute any of a variety of parameters or values that relate to applying picture-mode techniques in a source device as described herein. The image and video embodiments may be implemented in hardware, software, firmware and various combinations thereof.

Certain implementations of the invention comprise computer processors which execute software instructions which cause the processors to perform a method of the invention. For example, one or more processors in a display, an encoder, a set top box, a transcoder, or the like may implement methods related to applying picture-mode techniques in a source device as described above by executing software instructions in a program memory accessible to the processors. Embodiments of the invention may also be provided in the form of a program product. The program product may comprise any non-transitory and tangible medium which carries a set of computer-readable signals comprising instructions which, when executed by a data processor, cause the data processor to execute a method of the invention. Program products according to the invention may be in any of a wide variety of non-transitory and tangible forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the invention.

### EQUIVALENTS, EXTENSIONS, ALTERNATIVES AND MISCELLANEOUS

Example embodiments that relate to applying picture-mode techniques in a source device are thus described. In the foregoing specification, embodiments of the present invention have been described with reference to numerous specific details that may vary from implementation to implementation. Thus, the sole and exclusive indicator of what is the invention, and what is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

Various aspects of the present disclosure may be appreciated from the following Enumerated Example Embodiments (EEEs):
A method for displaying images on a sink device using a source device, the method comprising, in a source device: accessing extended display identification data (EDID) information from a sink device, wherein the EDID information includes picture mode parameters to adjust pixel processing in the source device according to a selected picture mode; accessing an input picture; and applying the picture mode parameters to adjust pixel processing parameters in the EDID to generate an output picture to be displayed on the sink device based on the input picture and the selected picture mode.

EEE 2. The method of EEE 1, wherein the EDID information is part of a vendor specific video data block in the EDID.

EEE 3. The method of EEE 1 or 2, wherein the picture mode comprises one of a vivid mode, a bright mode, or a dark mode.

EEE 4. The method of any one of EEEs 1 to 3, wherein the pixel processing parameters comprise default parameters used in pixel processing to generate the output picture.

EEE 5. The method of EEE 4, wherein the picture mode parameters comprise one or more of a brightness offset, a white point color shift offset, or a color saturation offset.

EEE 6. The method of any preceding EEE, wherein the sink device comprises a monitor or a display.

EEE 7. The method of any preceding EEE, wherein the source device comprises a personal computer, a set-top box, or a gaming machine.

EEE 8. A tangible computer-readable storage medium having stored thereon computer-executable instructions for executing with one or more processors a method in accordance with any one of the methods recited in EEEs 1-7.

EEE 9. An apparatus comprising a processor and configured to perform any one of the methods recited in EEEs 1-7.

## Claims

1. A method for displaying images on a sink device using a source device, the method comprising:
in a source device:
accessing extended display identification data (EDID) information from a sink device, wherein the EDID information includes picture mode parameters to adjust pixel processing in the source device according to a selected picture mode;
accessing an input picture; and
applying the picture mode parameters to adjust pixel processing parameters in the EDID to generate an output picture to be displayed on the sink device based on the input picture and the selected picture mode.

2. The method of claim 1, wherein the EDID information is part of a vendor specific video data block in the EDID.

3. The method of claim 1 or 2, wherein the picture mode comprises one of a vivid mode, a bright mode, or a dark mode.

4. The method of any one of claims 1 to 3, wherein the pixel processing parameters comprise default parameters used in pixel processing to generate the output picture.

5. The method of claim 4, wherein the picture mode parameters comprise one or more of a brightness offset, a white point color shift offset, or a color saturation offset.

6. The method of any preceding claim, wherein the sink device comprises a monitor or a display.

7. The method of any preceding claim, wherein the source device comprises a personal computer, a set-top box, or a gaming machine.

8. A tangible computer-readable storage medium having stored thereon computer-executable instructions for executing with one or more processors a method in accordance with any one of claims 1-7.

9. An apparatus comprising a processor and configured to perform the method recited in any one of claims 1-7.
